# EUROPEAN PATENT APPLICATION

(11) **EP 2 731 111 A1**
(43) Date of publication of application: **14.05.2014**
(21) Application number: 13186117.1
(22) Date of filing: 26.09.2013
(51) Int. Cl.: H01B 3/30, H01B 13/06, H01B 13/16, H02K 3/30

(54) **Thermoplastic copolymer insulated coil**

(30) Priority: 28.09.2012 US 201213630204
(71) Applicant: General Electric Company, Schenectady, New York 12345 (US)
(72) Inventor: Gupta, Sanjay, 500081 Andra Pradesh (IN); Musinana, Ravi Kumar, 500081 Andhra Pradesh (IN)
(74) Representative: Illingworth-Law, William Illingworth

(57) **Abstract**

A method for insulating a motor/generator coil 10 includes providing a thermoplastic copolymer material in liquid form and applying 34,40 a coating of the thermoplastic copolymer to the motor/generator coil 10 in a thickness sufficient to withstand a predetermined minimum voltage threshold.

## Description

### BACKGROUND OF THE INVENTION

The application generally relates to electrical insulation methods and materials. The application relates more specifically to electrical insulation methods and materials for manufacturing electrical motors, generators and the like.

Traditionally electric insulation for form coil of stator windings and rotor bars of wound rotors consists of a combination of polyester, mica and glass tapes. The tape is wound on the coils by a taping process to insulate the copper coils underneath the tape layer. The existing coil manufacturing process requires that part of the tape be applied manually. Manual taping of coils is a highly skilled process, and errors in taping may result in coil failure.

Currently one method of manufacturing form coils for motors/generators achieves a desired electric insulation is by providing multiple layers of different tapes made from a combination of polyester, glass and mica on the coil formed by pre-insulated copper conductors. Similarly insulation for wound rotor coil is achieved by taping the copper bars. The number of layers of tape applied to the coil may vary depending on the voltage for which the motor/generator is rated.

What is needed is a faster, more reliable and preferably automated process for applying insulation to form coils of stator windings and rotor bars of wound rotors.

Intended advantages of the disclosed systems and/or methods satisfy one or more of these needs or provide other advantageous features. Other features and advantages will be made apparent from the present specification. The teachings disclosed extend to those embodiments that fall within the scope of the claims, regardless of whether they accomplish one or more of the aforementioned needs.

### BRIEF DESCRIPTION OF THE INVENTION

The disclosed invention applies thermoplastic copolymer insulating material in place of insulation tape. A coating of thermoplastic copolymer is formed by spraying or dipping the coil surface to provide an electric insulation layer. The thermoplastic copolymer is applied in one or more layers of suitable thickness, which is determined by a motor/generator rated voltage that the insulated motor or generator components must withstand. Thermoplastic copolymers have very good dielectric strength, e.g., 5kV for 80 micron, and are commercially available in the market in the form of paints. This technique can be used to insulate form wound stator coils and wound rotors coils.

One embodiment relates to a method for insulating a motor/generator coil. The method includes providing a thermoplastic copolymer material in liquid form and applying a coating of the thermoplastic copolymer to the motor/generator coil in a thickness sufficient to withstand a predetermined minimum voltage threshold.

Another embodiment relates to a stator winding of an electric machine, wherein the stator winding is insulated according to the method described in the preceding paragraph.

Yet another embodiment relates to a rotor bar of an electric machine, wherein the rotor bar is insulated according to the method described above.

An advantage is the ability to automate the process of electric coils on electric motors or generators to achieve substantially uniform dielectric strength that will help reduce coil failures.

Another advantage is to reduce costs and failures associated with manual taping of electric coils.

Still another advantage is reduced weight and sized can be achieved through reduced insulation thickness.

Alternative exemplary embodiments relate to other features and combinations of features as may be generally recited in the claims.

### BRIEF DESCRIPTION OF THE DRAWINGS

FIG. 1 shows a controlled spray process for an exemplary stator winding.
FIG. 2 shows a controlled spray process for an exemplary rotor bar.
FIG. 3 is a flow chart of a method for applying an insulation coating to a motor/generator coil.

### DETAILED DESCRIPTION OF THE INVENTION

In the proposed invention, a coating of thermoplastic copolymer is used in place of the conventional insulating tape layer. The thermoplastic copolymer coating may be applied with a minimum thickness to withstand the desired insulation minimum voltage rating of about 5kV per 80 microns. Thermoplastic copolymers have excellent dielectric strength, thermal stability and thermal conductivity for motor and generator windings, and are available in the form of paints. The dielectric strength of an exemplary thermoplastic copolymer may be about 5kV per 80 microns of thickness. This dielectric strength is a typical value for a specific thermoplastic copolymer, but may vary depending on the composition of the thermoplastic copolymer. Typically for a 6.6 kV rated coil insulated with polyester, mica or glass tapes, the suitable insulation thickness may be in a range of about 0.7 mm - 0.8 mm. By comparison, a 6.6 kV rated coil insulated with a thermoplastic copolymer coating will require only around 0.3 mm thick. The voltage for medium voltage motors ranges from 2.3 kV to 13.8 kV, thus the thickness of the thermoplastic copolymer coating may be varied accordingly for the motor voltage rating. E.g., the coating thickness may vary approximately linearly, e.g., 1 mm at 2.3 kV, and 6.82 mm at 15 kV.

A controlled process may be used to apply thermoplastic copolymers on the coil surface to achieve a coating of required uniform thickness. Since these thermoplastic copolymers are available in liquid paint form, the insulation coating may be applied by spraying the liquid thermoplastic copolymer material on a coil surface or by dipping the coil in the paint. Further, thermoplastic copolymers are stable up to 210 C° which is better than National Electrical Manufacturers Association (NEMA) Insulation Class H insulation temperature tolerance, which is the highest rating of any insulation system.

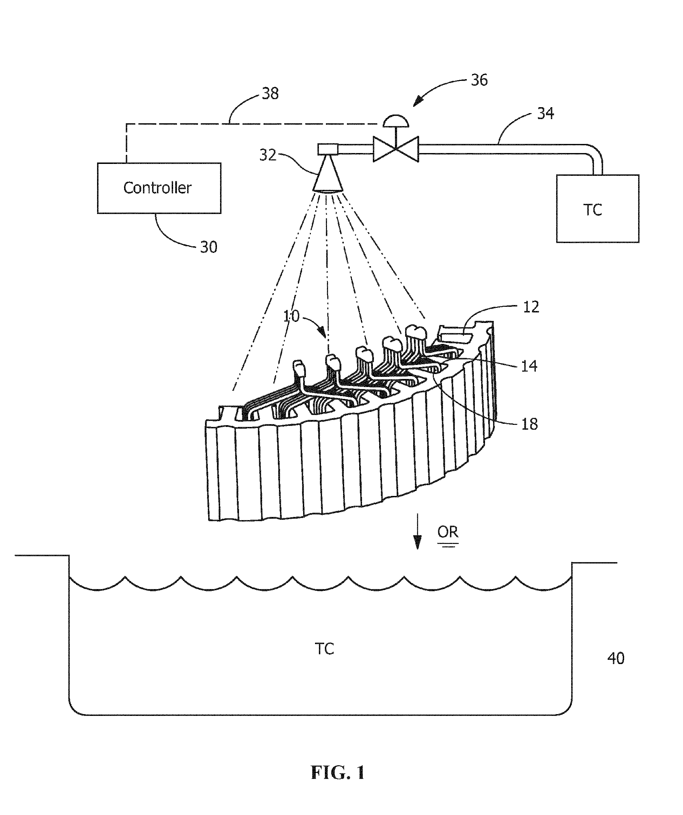

FIG. 1 shows a partial perspective view of an exemplary stator embodiment for a dynamoelectric machine. Stator winding 10 includes slots 12. A stator winding 16 made up of conductor segments 14 is installed in the stator core 18. In one embodiment, a sprayer 20 may be employed to apply a paint-like coating of thermoplastic copolymer to stator winding, in a process that allows the thickness of the thermoplastic copolymer to be controlled to a desired thickness when dry. In another embodiment, additional coatings of thermoplastic copolymer may be applied if, e.g., a higher breakdown voltage or voltage rating is desired for the stator section being sprayed. Alternately, a dip tank may be partially filled with the liquid thermoplastic copolymer and the stator winding dipped into the dip tank to coat the stator winding.

A controller 30, e.g., a microprocessor based device with programmable features, may be programmed to control flow - e.g., via a solenoid valve 36 connected by a control cable 38 of thermoplastic copolymer to a spray head 32 at a constant rate to achieve a uniform thickness. A flow sensor in line 34 may be connected to the controller 30 to indicate the total amount of thermoplastic copolymer material that has been applied to the stator winding or rotor bar so that controller 30 can determine over time the amount of material that has been applied and the thickness of the thermoplastic copolymer coating when dry.

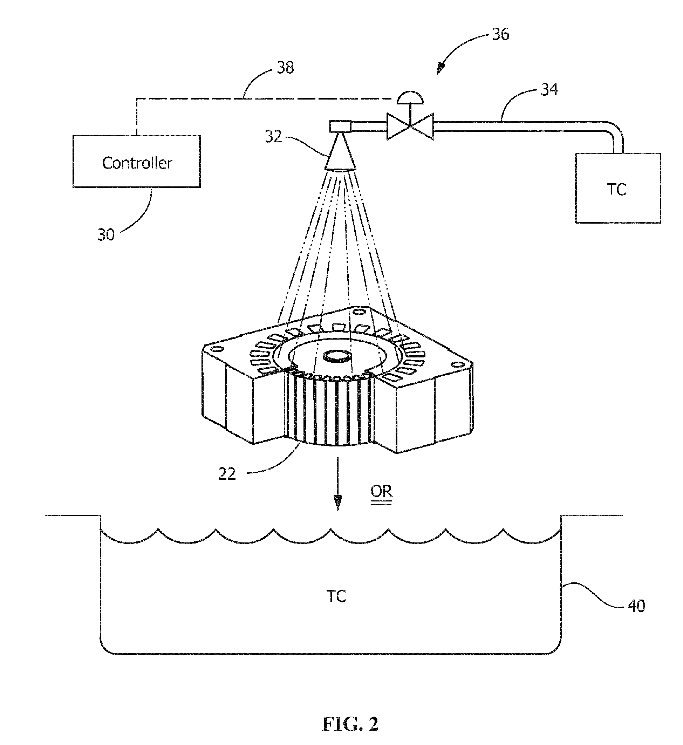

Similarly, for a dipping process, controller 30 may be used to control the amount of time that the stator winding 10 or rotor bar 22 (FIG. 2) is submerged in tank 40, and other factors, e.g., temperature of the liquid thermoplastic copolymer material, which will determine the thickness of the thermoplastic copolymer coating when dry.

FIG. 2 shows an exemplary embodiment of a rotor bar 22. Sprayer 20 is shown applying a paint-like coating of thermoplastic copolymer to rotor bar 22, in a process substantially identical to the process described above for stator winding coating.

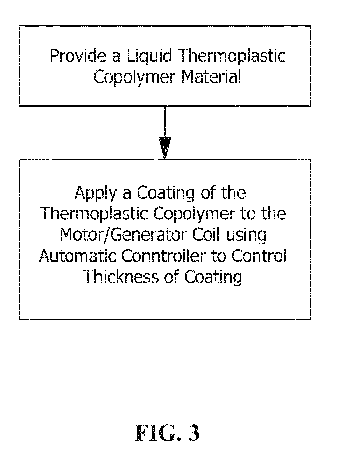

FIG. 3 is a flow chart of a method for applying an insulation coating to a motor/generator coil. At step 100, the process begins by providing a liquid thermoplastic copolymer material. Next, at step 102, the user applies a coating of the thermoplastic copolymer to the motor/generator coil using an automatic controller to automatically control a thickness of the coating thermoplastic copolymer.

It should be understood that the application is not limited to the details or methodology set forth in the following description or illustrated in the figures. It should also be understood that the phraseology and terminology employed herein is for the purpose of description only and should not be regarded as limiting.

The present application contemplates methods, systems and program products on any machine-readable media for accomplishing its operations. The embodiments of the present application may be implemented using an existing computer processors, or by a special purpose computer processor for an appropriate system, incorporated for this or another purpose or by a hardwired system.

It is important to note that the construction and arrangement of the thermoplastic copolymer coating of motor/generator coils as shown in the various exemplary embodiments is illustrative only. Although only a few embodiments have been described in detail in this disclosure, those who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, elements shown as integrally formed may be constructed of multiple parts or elements, the position of elements may be reversed or otherwise varied, and the nature or number of discrete elements or positions may be altered or varied. Accordingly, all such modifications are intended to be included within the scope of the present application. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating conditions and arrangement of the exemplary embodiments without departing from the scope of the present application.

It should be noted that although the figures herein may show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the application. Likewise, software implementations could be accomplished with standard programming techniques with rule based logic and other logic to accomplish the various connection steps, processing steps, comparison steps and decision steps.

While the exemplary embodiments illustrated in the figures and described herein are presently preferred, it should be understood that these embodiments are offered by way of example only. Accordingly, the present application is not limited to a particular embodiment, but extends to various modifications that nevertheless fall within the scope of the appended claims. The order or sequence of any processes or method steps may be varied or re-sequenced according to alternative embodiments.

Various aspects and embodiments of the present invention are now defined by the following clauses:
1. A method for insulating a motor/generator coil, comprising:
   providing a thermoplastic copolymer material in liquid form;
   applying a coating of the thermoplastic copolymer to the motor/generator coil in a thickness sufficient to withstand a rated voltage of the motor/generator coil.
2. The method of clause 1, wherein a typical value of the dielectric strength of the thermoplastic copolymer is about 5kV per 80 microns of thickness.
3. The method of clause 1 or clause 2, wherein a voltage rating of the motor/generator coil ranges from 2.3 kV to 15 kV and the thermoplastic copolymer coating varies approximately linearly in thickness from about 1.0 mm at 2.3 kV to about 6.82 mm at 15 kV.
4. The method of any preceding clause, wherein the step of applying further comprises using a controlled process to apply thermoplastic copolymers on the coil surface to achieve a coating having a uniform thickness.
5. The method of any preceding clause, wherein the step of applying comprises spraying the liquid thermoplastic copolymer material on a coil surface.
6. The method of any preceding clause, wherein the liquid thermoplastic copolymer material is in a paint form.
7. The method of any preceding clause, wherein the step of applying comprises dipping the motor/generator coil in the liquid thermoplastic copolymer material.
8. The method of any preceding clause, wherein the thermoplastic copolymer material is stable up to about 210 C°.
9. The method of any preceding clause, further comprising the step of automatically controlling application of the thermoplastic copolymer material by spraying the thermoplastic copolymer material on the motor/generator coil at a constant rate to achieve a uniform predetermined thickness of the thermoplastic copolymer coating.
10. The method of any preceding clause, further comprising the step of automatically controlling application of the thermoplastic copolymer material by dipping the motor/generator coil into the liquid thermoplastic copolymer material for a predetermined amount of time at a predetermined temperature to achieve a uniform predetermined thickness of the thermoplastic copolymer coating.
11. A motor/generator coil of a dynamoelectric machine, comprising:
   an insulation material of thermoplastic copolymer material applied in liquid form to form a coating of the thermoplastic copolymer on the motor/generator coil in a thickness sufficient to withstand a predetermined minimum voltage threshold.
12. The motor/generator coil of any preceding clause, wherein the motor/generator coils is a stator winding.
13. The motor/generator coil of any preceding clause, wherein the motor/generator coils is a rotor bar.
14. The motor/generator coil of any preceding clause, wherein a typical value of the dielectric strength of the thermoplastic copolymer is about 5kV per 80 microns of thickness.
15. The motor/generator coil of any preceding clause, wherein a voltage rating of the motor/generator coil ranges from 2.3 kV to 15 kV and the thermoplastic copolymer coating varies approximately linearly in thickness from about 1.0 mm at 2.3 kV to about 6.82 mm at 15 kV.
16. The motor/generator coil of any preceding clause, wherein a controlled process is used to apply thermoplastic copolymers on the coil surface to achieve a coating having a uniform thickness.
17. The motor/generator coil of any preceding clause, wherein the liquid thermoplastic copolymer material is sprayed on a coil surface.
18. The motor/generator coil of any preceding clause, wherein the motor/generator coil is dipped in the liquid thermoplastic copolymer material.
19. The motor/generator coil of any preceding clause, wherein the thermoplastic copolymer material is stable up to about 210 C°.
20. The motor/generator coil of any preceding clause, wherein the thermoplastic copolymer coating is automatically controlled by spraying the thermoplastic copolymer material on the motor/generator coil at a constant rate to achieve a uniform predetermined thickness of the thermoplastic copolymer coating.

## Claims

1. A method for insulating a motor/generator coil, comprising:
providing a thermoplastic copolymer material in liquid form;
applying a coating of the thermoplastic copolymer to the motor/generator coil in a thickness sufficient to withstand a rated voltage of the motor/generator coil.

2. The method of claim 1, wherein a typical value of the dielectric strength of the thermoplastic copolymer is about 5kV per 80 microns of thickness.

3. The method of claim 1 or claim 2, wherein a voltage rating of the motor/generator coil ranges from 2.3 kV to 15 kV and the thermoplastic copolymer coating varies approximately linearly in thickness from about 1.0 mm at 2.3 kV to about 6.82 mm at 15 kV.

4. The method of any preceding claim, wherein the step of applying further comprises using a controlled process to apply thermoplastic copolymers on the coil surface to achieve a coating having a uniform thickness.

5. The method of any preceding claim, wherein the step of applying comprises spraying the liquid thermoplastic copolymer material on a coil surface.

6. The method of any preceding claim, wherein the liquid thermoplastic copolymer material is in a paint form.

7. The method of any preceding claim, wherein the step of applying comprises dipping the motor/generator coil in the liquid thermoplastic copolymer material.

8. The method of any preceding claim, wherein the thermoplastic copolymer material is stable up to about 210 C°.

9. The method of any preceding claim, further comprising the step of automatically controlling application of the thermoplastic copolymer material by spraying the thermoplastic copolymer material on the motor/generator coil at a constant rate to achieve a uniform predetermined thickness of the thermoplastic copolymer coating.

10. The method of any preceding claim, further comprising the step of automatically controlling application of the thermoplastic copolymer material by dipping the motor/generator coil into the liquid thermoplastic copolymer material for a predetermined amount of time at a predetermined temperature to achieve a uniform predetermined thickness of the thermoplastic copolymer coating.

11. A motor/generator coil (10) of a dynamoelectric machine, comprising:
an insulation material of thermoplastic copolymer material applied in liquid form to form a coating of the thermoplastic copolymer on the motor/generator coil in a thickness sufficient to withstand a predetermined minimum voltage threshold.

12. The motor/generator coil of claim 11, wherein the motor/generator coils is a stator winding.

13. The motor/generator coil of claim 11 or claim 12, wherein the motor/generator coils is a rotor bar.

14. The motor/generator coil of any of claims 11 to 13, wherein a typical value of the dielectric strength of the thermoplastic copolymer is about 5kV per 80 microns of thickness.

15. The motor/generator coil of any of claims 11 to 14, wherein a voltage rating of the motor/generator coil ranges from 2.3 kV to 15 kV and the thermoplastic copolymer coating varies approximately linearly in thickness from about 1.0 mm at 2.3 kV to about 6.82 mm at 15 kV.
